# EUROPEAN PATENT APPLICATION

(11) **EP 2 073 495 A1**
(43) Date of publication of application: **24.06.2009**
(21) Application number: 08172215.9
(22) Date of filing: 18.12.2008
(51) Int. Cl.: H04L 29/06, H04N 7/16

(54) **Method of management of metadata size of a service guide**

(30) Priority: 21.12.2007 EP 07301739
(71) Applicant: THOMSON Licensing S.A., 92100 Boulogne-Billancourt (FR)
(72) Inventor: Jahah, Gael, 92648, BOULOGNE CEDEX (FR); Girault, Véronique, 92648, BOULOGNE CEDEX (FR); Ollivier, Remi, 92648, BOULOGNE CEDEX (FR)
(74) Representative: Le Dantec, Claude

(57) **Abstract**

The invention enables reducing of the complexity of Service Guide size management related to the management of the bandwidth occupied by a combination of streams comprising audio / and or video streams, signaling streams and service guide streams.

The invention relates more particularly to a method of management of metadata size of a service guide, by devices part of a contribution network, and comprises a step (1501) of determination of a maximum size of the service guide metadata as a function of a protocol encapsulator fill level, a step (1502) of sending of a message containing the maximum size for the service guide metadata to a service guide server, and a step (1503) of delivery by said service guide server of service guide metadata to the protocol encapsulator where the size of the said service guide metadata is smaller than or equal to said maximum size.

## Description

### 1. Field of invention.

The invention relates to the field of communication and more precisely to the management of the size of service guide metadata.

### 2. Technical background.

According to the state of the art, an Electronic Program(me) Guide (EPG) or also an Interactive Program(me) Guide (IPG) or Electronic Service Guide (ESG), Service Guide (SG) or Broadcast Content Guide (BCG) is an on-screen guide to scheduled broadcast television programs or video/music catalog, allowing a viewer to navigate, select, and discover content by time, title, channel, genre, etc, by use of their remote control or other input device. The data comprising a service guide is commonly called metadata, that is, data about data, in this case data about audio and/or video data. An example standard for service guide metadata is the TV-Anytime standard, available as an ETSI document with reference TS 102 822-1. Amongst other relevant standards in the domain are worth mentioning the documents ETSI TS 102 539: "Digital Video Broadcasting (DVB); Carriage of Broadband Content Guide (BCG) information over Internet Protocol (IP)" and ETSI TS 102 471: "IP Datacast over DVB-H: Electronic Service Guide (ESG)", and ETSI TS 102 323: "Digital Video Broadcasting (DVB); Carriage and signaling of TV-Anytime information in DVB transport streams".

In the following text, we will use the term Service Guide to indicate all of these types of metadata browsers.

Traditionally, service guides where designed to accompany broadcasted television programs and metadata size was relatively small when compared to the related audio and/or video data. But with the emergence of technologies such as broadband transmission using the internet protocol, more bandwidth, though still limited, was made available for metadata. Also, with the availability of a return channel, real Video-on-Demand (VoD) became possible, and it was necessary to provide users with a catalog of available videos or music. Current technologies for enveloping service guide metadata seem to tend to the use of the Extensible Markup Language (XML), and the verbosity of this format can not be ignored in terms of impact on the amount of data to transmit. With bandwidth being a limited and costly resource, solutions have been imagined that help reducing the size of the metadata needed to transmit a service guide.

Thus, the size of service guide metadata has been continuously increasing since the introduction of the first service guides.

In the mean time, broadband media distribution has been developed for portable devices, such as cellular phones. These portable devices have now become multi-media enabled, and are thus capable of receiving audio and/or video streams and Service Guides. Mainstream standards have emerged for mobile broadcast, such as DVB-H (Digital Video Broadcasting-Handheld, document ETSI EN 302 304) including the transmission of service guides, amongst which DVB-IPDC (Digital Video Broadcasting - Internet Protocol Data Casting, document "IP Datacast over DVB-H: Electronic Service Guide (ESG) Implementation Guidelines" (draft TS 102 592 V1.1.1)) and OMA BCAST (Open Mobile Alliance - Mobile Broadcast Services Enabler Suite). OMA BCAST is currently (December 2007) finalizing its 1.0 specification.

According to the current state of the art, different techniques are employed to reduce the size of the service guide metadata. One of these techniques comprises the compression of the service guide metadata before its transmission, such as the Binary MPEG format for XML (BiM), specified in the ISO/IEC 23001-1, and allows obtaining interesting gains in bandwidth that is needed to transmit a service guide over a communication channel. This compression scheme has been accepted for transmission of service guide metadata by the DVB-IP standard (ETSI TS 102 034), as an optional feature. But the use of compression brings in the disadvantage of processing-intensive compression and decompression algorithms.

### 3. Summary of the invention.

The present invention aims at alleviating the inconveniences of

### prior art.

More specifically, the invention enables reducing of the complexity of Service Guide size management related to the management of the bandwidth occupied by a combination of streams comprising audio and/or video streams, signaling streams and service guide streams.

The invention relates more particularly to a method of management of metadata size of a service guide, by devices part of a contribution network, comprising a protocol encapsulator accepting as input audio and/or video data and service guide data and a service guide server, in order to reduce the complexity of Service Guide size management related to the management of the bandwidth occupied by a combination of streams comprising audio and/or video streams, signaling streams and service guide streams. Therefore, a protocol encapsulator using the invention determines a maximum size for the service guide metadata as a function of a protocol encapsulator fill level and sends a message containing the maximum size for the service guide metadata to a service guide server connected to the contribution network, and the service guide server delivers service guide metadata to the protocol encapsulator where the size of the service guide metadata is smaller than or equal to the maximum size.

According to a particular embodiment of the invention, the service guide metadata is provided to the protocol encapsulator in the Extensible Markup Language (XML) format.

According to a particular embodiment of the invention, the service guide metadata is stored in the service guide server in the Extensible Markup Language (XML) metadata tree format.

According to a particular embodiment of the invention, the service guide server respects the maximum metadata size by pruning of the Extensible Markup Language (XML) metadata tree.

According to a particular embodiment of the invention, the service guide server varies the duration in days of the service guide metadata in order to respect the maximum metadata size.

According to a particular embodiment of the invention, the service guide server respects the maximum metadata size by either pruning the metadata tree or by varying the duration in days of the service guide metadata.

According to a particular embodiment of the invention, the service guide server respects the maximum metadata size by pruning the metadata tree and by varying the duration in days of the service guide metadata.

According to a particular embodiment of the invention, the message containing the maximum service guide metadata size is sent upon expiration of a time delay.

According to a particular embodiment of the invention, the message containing the maximum service guide metadata size is sent upon exceeding of a predetermined maximum value of the encapsulator fill level.

According to a particular embodiment of the invention, the message, containing the maximum service guide metadata size, is sent upon expiration of a time delay and upon exceeding of a predetermined maximum value of the encapsulator fill level.

### 4. List of Figures.

More advantages of the invention will appear through the description of particular, non-restricting embodiments of the invention. The embodiments will be described with reference to the following figures:
- Figure 1 shows part of a contribution network according to prior art.
- Figure 2 shows part of a contribution network according to a first embodiment of the invention.
- Figure 3 shows two components of a contribution network according to the first embodiment in more details.
- Figure 4 shows an algorithm of the management of the fill level of a protocol encapsulator that is part of a contribution network implementing the invention.
- Figure 5 gives a detailed view of a service guide server according to the first embodiment of the invention.
- Figures 6 and 7 illustrate a method for service guide metadata size reduction inside a service guide server according to the first embodiment of the invention.
- Figure 8 shows an algorithm used by the service guide server according to the first embodiment of the invention.
- Figure 9 shows part of a contribution network according to a second embodiment of the invention.
- Figure 10 shows two components of the contribution network according to the second embodiment in more details.
- Figure 11 gives a detailed view of a service guide server according to the second embodiment of the invention.
- Figures 12 and 13 illustrate a method for service guide metadata size reduction inside a service guide server according to the second embodiment of the invention.
- Figure 14 shows an algorithm used by the service guide server according to the second embodiment of the invention. And
- Figure 15 shows an algorithm according to the main characteristics of the invention.

### 5. Detailed description of the invention.

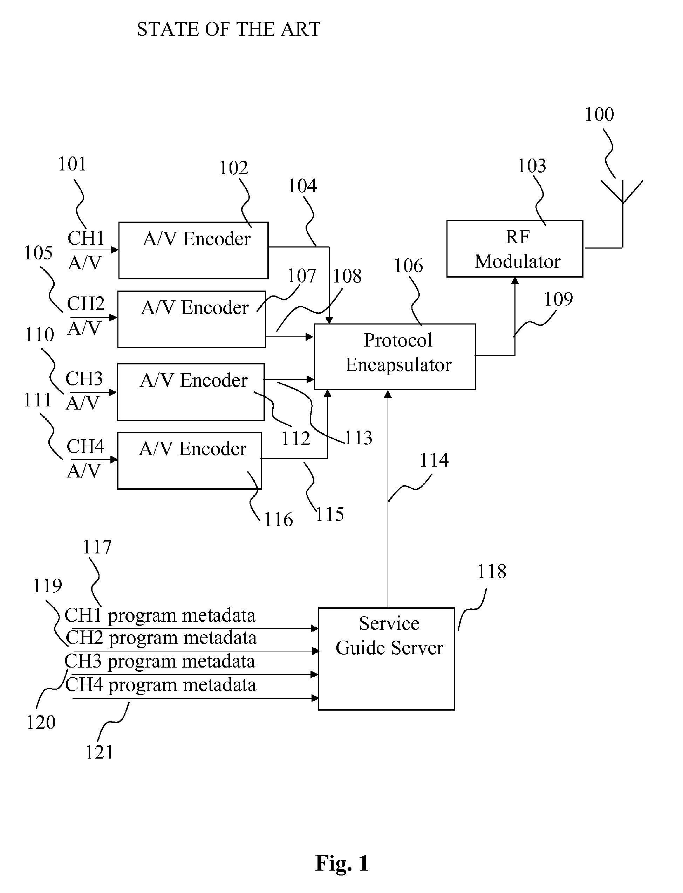

**Figure 1** shows parts of a contribution network according to prior art. As an example, the network comprises a set of Audio/Video Encoders or A/V Encoders 102, 107, 112 and 116, that encode the contents of video or audio channels with names CH1, CH2, CH3 and CH4 (inputs 101, 105, 110 and 111 respectively) in a specific format, such as MPEG2 or H.264. The outputs 104, 108, 113 and 115 of these encoders enter a protocol encapsulator 106. A part from A/V data, the protocol encapsulator 106 also receives service guide metadata output 114 from Service Guide Server 118. This server receives metadata input from inputs 117, 119, 120 and 121, for the channels CH1 to CH4 respectively. Finally, the output 109 of the protocol encapsulator enters an RF modulator 103 and a modulated signal is transmitted using an antenna 100.

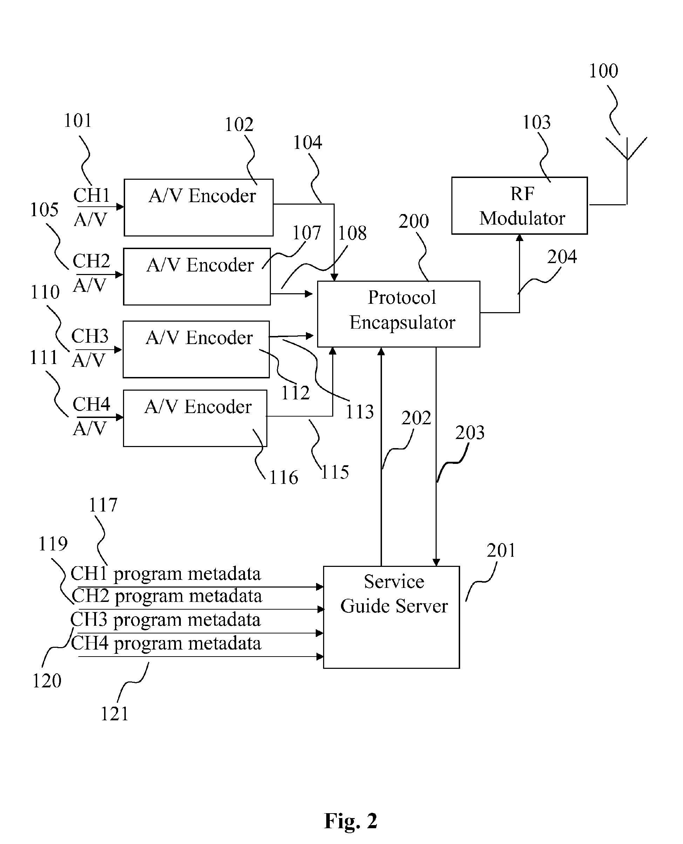

**Figure 2** shows parts of a contribution network according to a first embodiment of the invention. To reduce the complexity of the figure, only four inputs are shown, but a Protocol Encapsulator according to the invention can have more than four inputs such as 1, 2, 3, 10 or 20. The network comprises a set of Audio/Video Encoders or A/V Encoders 102, 107, 112 and 116, that encode the contents of video or audio channels with names CH1, CH2, CH3 and CH4 (inputs 101, 105, 110 and 111 respectively) in a specific format, such as MPEG2 video (known as standard ISO/IEC 13818-2) or H.264 video (ISO/IEC 14496-10). The outputs 104, 108, 113 and 115 of these encoders enter a protocol encapsulator 200. Besides A/V data, the Protocol Encapsulator 200 also receives service guide metadata output 202 from Service Guide Server 201. This server receives metadata input from inputs 117, 119, 120 and 121, for the channels CH1 to CH4 respectively. To reduce the complexity of the figure, only four inputs are shown, but a Service Guide server according to the invention can have any number of inputs, such as 1, 2, 3, 10 or 20. The Protocol Encapsulator 200 outputs a feedback signal 203 to the service guide server 201, allowing the protocol encapsulator to control the size of the outputted metadata that it receives on input 202. Finally, the output 204 of the protocol encapsulator enters an RF modulator 103 and a modulated signal is transmitted using an antenna 100.

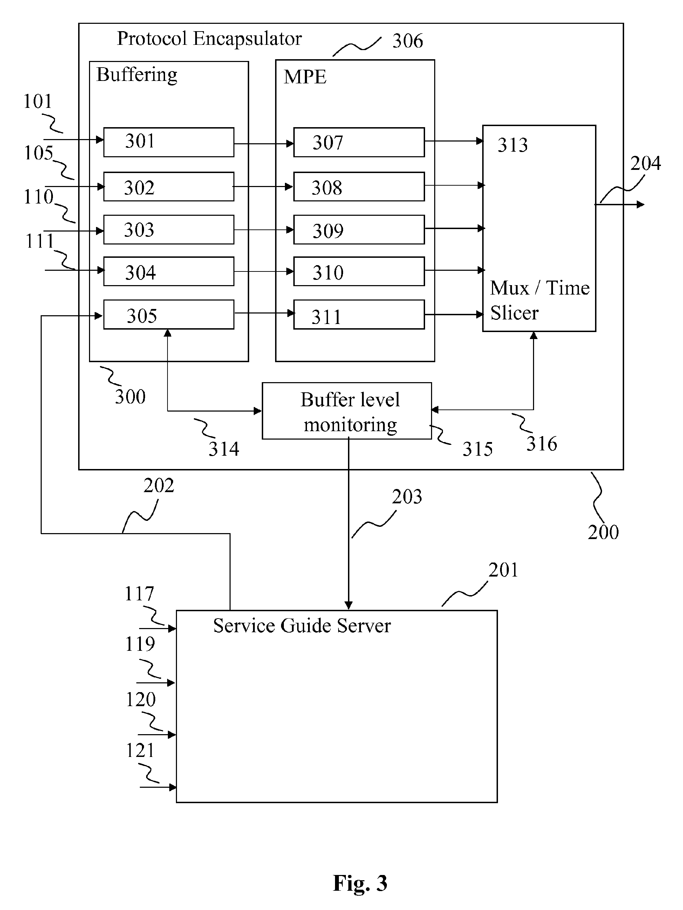

**Figure 3** shows the operation of the protocol encapsulator 200 according to the first embodiment of the invention. The main role of the protocol encapsulator is to adapt input data to a specific output format that is accepted by a modulator. The protocol encapsulator 200 receives on its inputs Service Guide metadata streams as well as Audio and/or Video data streams, and adapts these for transmission over an ASI (Asynchronous Serial Interface) type output to a DVB-H modulator. Typically, a Protocol Encapsulator according to the invention is capable of handling more than one A/V stream and a Service Guide stream, and optionally some signalization data, such as DVB-SI (Digital Video Broadcasting - Service Information, ETSI EN 300468 and ETSI TR 101 211). This Protocol Encapsulator comprises a function for buffering of input data 300, with buffers 301, 302, 303, 304 and 305 for each respective input 101, 105, 110, 111 and 202; a protocol encapsulator function 306, here depicted as an example by the name MPE for Multi-Protocol Encapsulation according to standard ETSI EN 301 192, and a multiplexer / Time Slicer function 313. Other encapsulation methods than MPE are possible and are not excluded by the invention. The encapsulator function 306 provides means to carry packet oriented protocols (like for instance IP) on top of MPEG-2 Transport Stream (TS). Function 306 comprises separate encapsulation functions 307 to 311 for all outputs of buffers 301 to 305 respectively. The outputs of these encapsulation functions are input to the multiplexing / time slicing function 313. The multiplexing function is used to combine multiple input streams into one single Transport Stream (TS, specified in standard ISO/IEC 13818-1), and a time slicing may be used for battery saving of portable receivers, and such a time slicing function may comprise partitioning of the available space on the transportation link in terms of time slot or bandwidth. The output signal of the multiplexer / time slicer function 313 is put on output 204 to an RF modulator. A Protocol Encapsulator 200 further comprises a fill level monitoring function 315 that monitors the buffer 305 fill level via connection 314. According to a particular embodiment of the invention, the monitoring function uses a fill level signal from the multiplexer / time slicer 313, thus relating the fill level monitoring to the overall bandwidth needed for the multiplexed / time sliced data. According to a particular embodiment of the invention, this signal is used by the fill level monitoring function 315 in stead of the signal 314 from the Service Guide metadata buffer 305. According to a particular embodiment of the invention, the signal 316 is used by the fill level monitoring function in conjunction with the signal 314. The monitoring function 315 determines the maximum size for the Service Guide metadata as a function of the encapsulator fill level. The monitoring function may decide to send a message 203 to the Service Guide server 201 that contains the maximum size for the service guide metadata, in order to control the maximum size of the metadata that is sent by the latter. The Service Guide server 201 receives input data that contains metadata for the channels CH1 to CH4, on inputs 117 and 119 to 121 respectively, and delivers service guide metadata to the protocol encapsulator while assuring that the size of the delivered metadata is lower than or equal to the maximum size as indicated by the message from the protocol encapsulator.

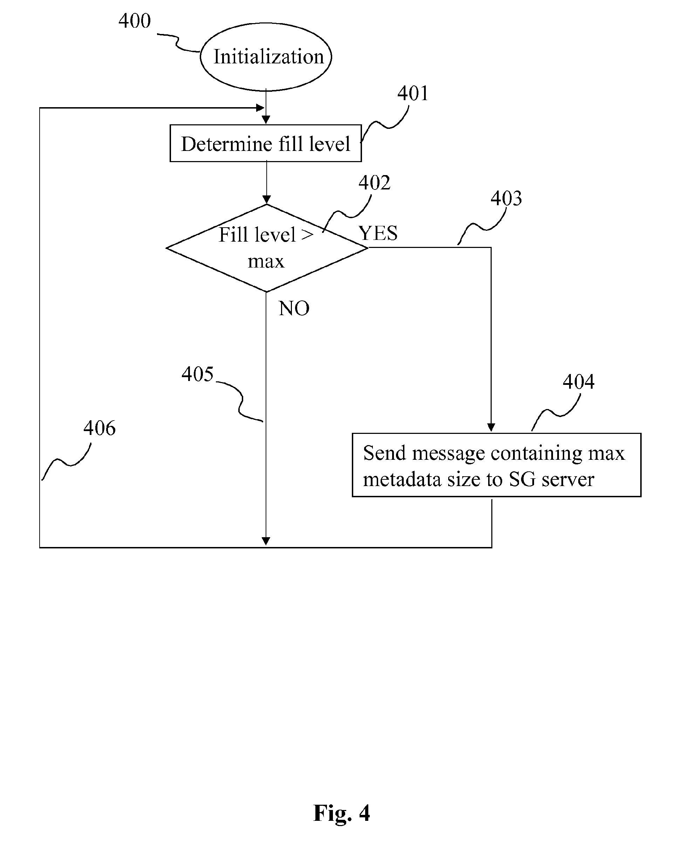

**Figure 4** shows an algorithm of the management of the fill level of a protocol encapsulator according to a particular embodiment of the invention. The algorithm starts with step 400 which comprises the initialization of the algorithm, during which variables are initialized. A fill level is determined in a step 401. This fill level is then compared to a predetermined maximum level in a decisional step 402. If the fill level exceeds the predetermined maximum level, then branch 403 is taken, which leads to step 404, which comprises the sending of a message to the Service Guide server indicating a maximum size for the Service Guide metadata, after which step 401 is executed again. On the other hand, if the fill level does not exceed the predetermined maximum level, branch 405 is taken, and step 401 is executed again. According to a particular embodiment of the invention, the algorithm does not comprise step 402 but step 404 is executed directly after step 401, and then step 401 is executed again after expiration of a time delay. This has the advantage to update the Service Guide server with regular updates on the state of the fill level and may be used to anticipate high fill levels and thus result in a better regulation of the Service Guide metadata size. According to a particular embodiment of the invention, the algorithm includes step 402, with which step 404 is executed upon a positive evaluation of the condition of decisional step 402, and also includes the execution of step 404 upon expiration of a time delay. This has the combined advantage of alerting the Service Guide server of metadata sizes exceeding a predetermined maximum size, while regularly updating the Service Guide server with fill level values, allowing the Service Guide server to determine tendencies in the evolution of the fill level, and therewith allowing it to better anticipate and thus deliver service guide metadata to the protocol encapsulator while assuring that the size of the delivered metadata is lower than or equal to the maximum size as indicated by the message from the protocol encapsulator.

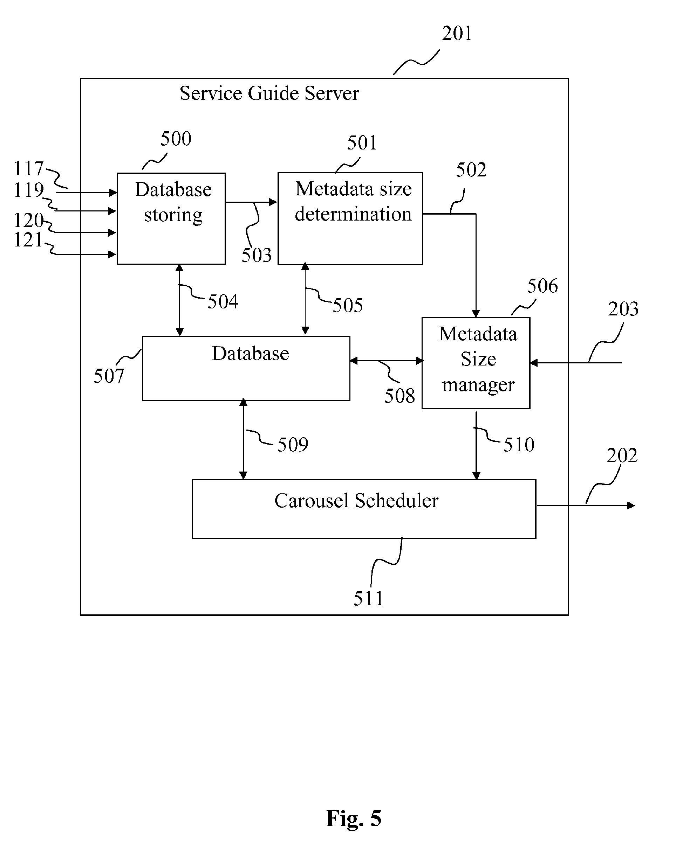

**Figure 5** gives a detailed view of a service guide server according to the first embodiment of the invention. Service Guide server 201 comprises a function 500 allowing to store incoming service guide metadata in the Extended Markup Language (XML) format on inputs 117, 119, 120 and 121 into database 507, by means of connection 504. Then, a function 501 prepares the Service Guide server by going through the XML metadata tree in the database, determining available options for exclusion of nodes and leafs, calculating the data size of each option, and annotating the metadata tree nodes and leafs in the database with the specifics of each option and its corresponding size. Function 501 uses connection 505 to access the database. Function 506, the Metadata Size Manager, listens for messages from Protocol Encapsulator 200 indicating a maximum value for the metadata that Service Guide server 201 may send over connection 202. This type of message is received over connection 203 that is an input for Metadata Size manager function 506. This management function has access to the database with connection 508. Furthermore, Service Guide server comprises a function 511 that enables this server to send the service guide in a carousel format to the Protocol Encapsulator 200. The manager function 506 decides if parts of the stored XML metadata tree or elements of the XML metadata tree must be excluded by Carousel Scheduler 511 for inclusion into the carousel that is sent to the Protocol Encapsulator. This method of exclusion of parts of the metadata tree is also designated by the word "pruning" hereafter. Therefore the manager function 506 comprises a step of marking of optional metadata tree parts that must be excluded, or unmarking of tree parts that had previously been marked. To do so, manager function 506 goes through the XML metadata tree stored in the database and uses the options and size annotations that were previously added to the tree by function 501. Depending on the metadata size restriction that it received in a message from the Protocol Encapsulator, manager function 506 marks parts of the metadata tree to be excluded, or un-marks previously marked parts. Then, Carousel Scheduler 511 can start a new data collection, after which it builds a new metadata carousel that does not include metadata that has been marked for exclusion by manager function 506. Finally, Carousel Scheduler 511 sends the metadata carousel in the XML format to Protocol Encapsulator 200 by means of connection 202.

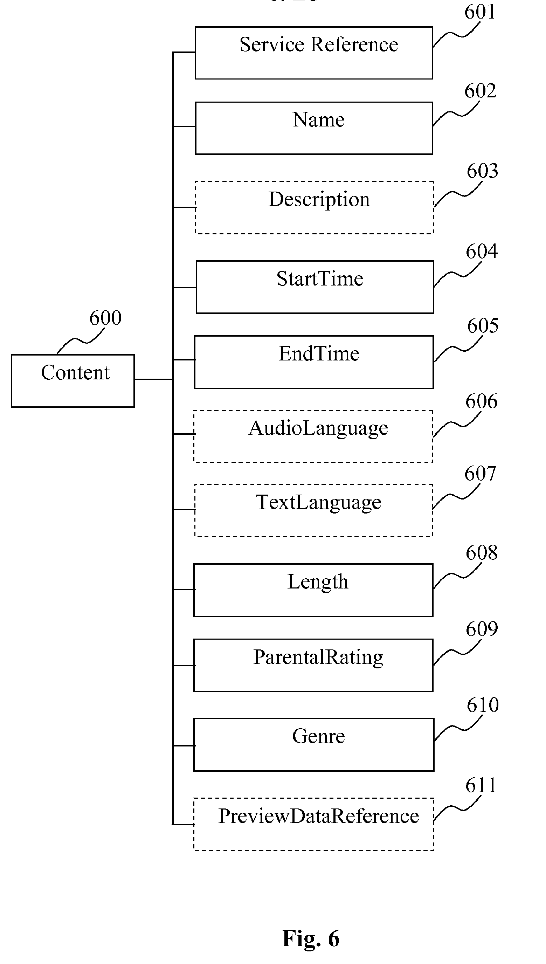

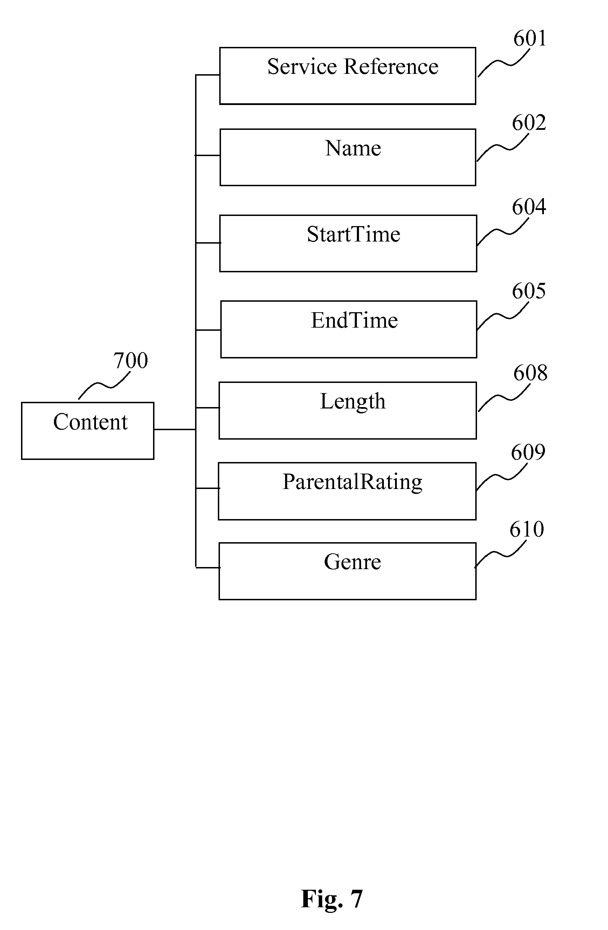

The method for excluding parts of the metadata tree is explained by means of figures 6 and 7. **Figure 6** shows a part of a Service Guide metadata tree. Element 600 can be referred to as a node, and elements 601 to 611 can be referred to as leafs or leaf nodes. The dotted elements are optional and can be excluded of the metadata carousel that is transmitted on output 202, according to a decision taken by the Metadata Size Manager 506, while still keeping the metadata tree a valid XML document. A valid XML document is a document of which the syntax conforms to a schema, for example an XML schema for a Service Guide as defined by OMA BCAST "Mobile Broadcast Services - XML Schema for Service Guide Fragments".

**Figure 7** shows a part of a metadata tree where optional elements have been excluded.

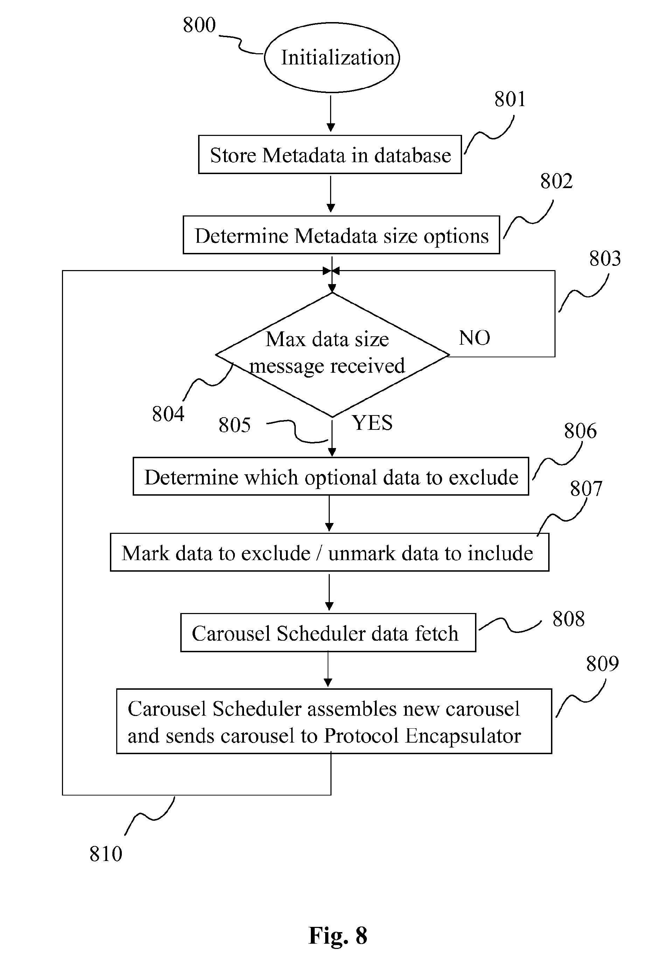

**Figure 8** shows an algorithm used by a Service Guide server according to the first embodiment of the invention. A first step 800 comprises initialization of variables used. Next, a step 801 stores incoming metadata on its inputs in a database. Then, during a step 802, the metadata size and options are determined and annotated in the metadata tree that has previously been stored in the database. Then, in a step 804, the Metadata Size Manager is ready to receive a message from Protocol Encapsulator 200 indicating a maximum size for the metadata that the Service Guide server may output. Following branch 803, step 804 is repeated as long as such a message is not received. However, when such a message is indeed received, branch 805 is taken which leads to step 806, where the Metadata Size Manager decides which optional parts of the metadata tree in the database to exclude, if necessary. Then, in a step 807, Metadata Size Manager marks data to be excluded and/or un-marks data that was already marked for exclusion in a previous iteration of steps 804 to 810, if needed. As a next step 808, a Carousel Scheduler fetches the not marked data from the database, assembles a new carousel and sends the carousel to the Protocol Encapsulator in a step 809. Finally, the algorithm returns to step 804 and waits for another message from the Protocol Encapsulator.

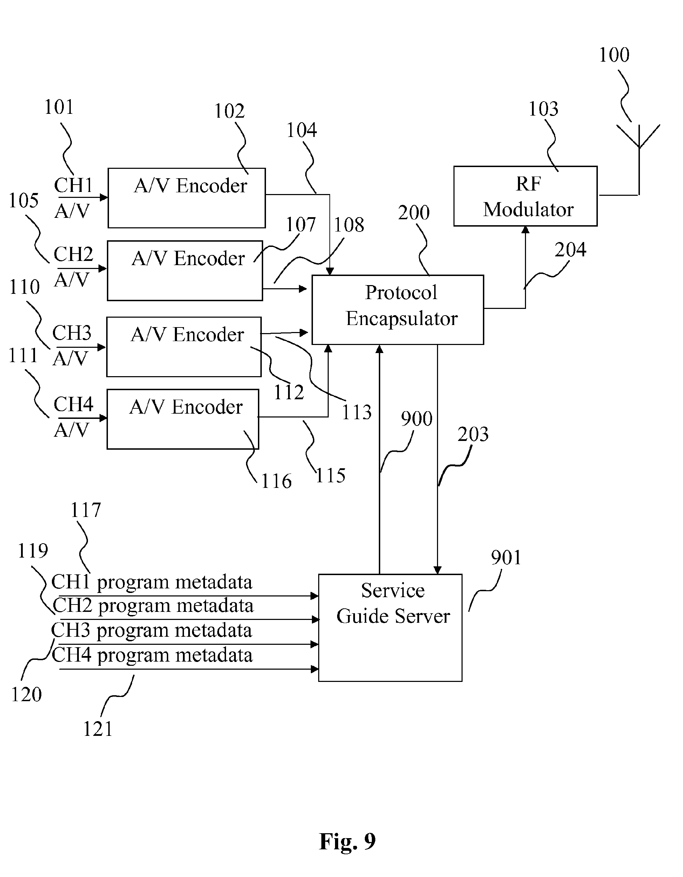

**Figure 9** shows parts of a contribution network according to a second embodiment of the invention. To reduce the complexity of the figure, the figure shows only four inputs, but a Protocol Encapsulator according to the invention can have more than four inputs. The network comprises a set of Audio/Video Encoders or A/V Encoders 102, 107, 112 and 116, that encode the contents of video or audio channels with names CH1, CH2, CH3 and CH4 (inputs 101, 105, 110 and 111 respectively) in a specific format, such as MPEG2 or H.264. The outputs 104, 108, 113 and 115 of these encoders enter a protocol encapsulator 200. A part from A/V data, the Protocol Encapsulator 200 also receives service guide metadata output 900 from Service Guide Server 901. This server receives metadata input from inputs 117, 119, 120 and 121, for the channels CH1 to CH4 respectively. The Protocol encapsulator 200 outputs a feedback signal 203 to the Service Guide server 201, allowing the Protocol Encapsulator to control the size of the metadata that it receives over connection 900. Finally, the output 204 of the Protocol Encapsulator enters an RF modulator 103 and a modulated signal is transmitted using an antenna 100.

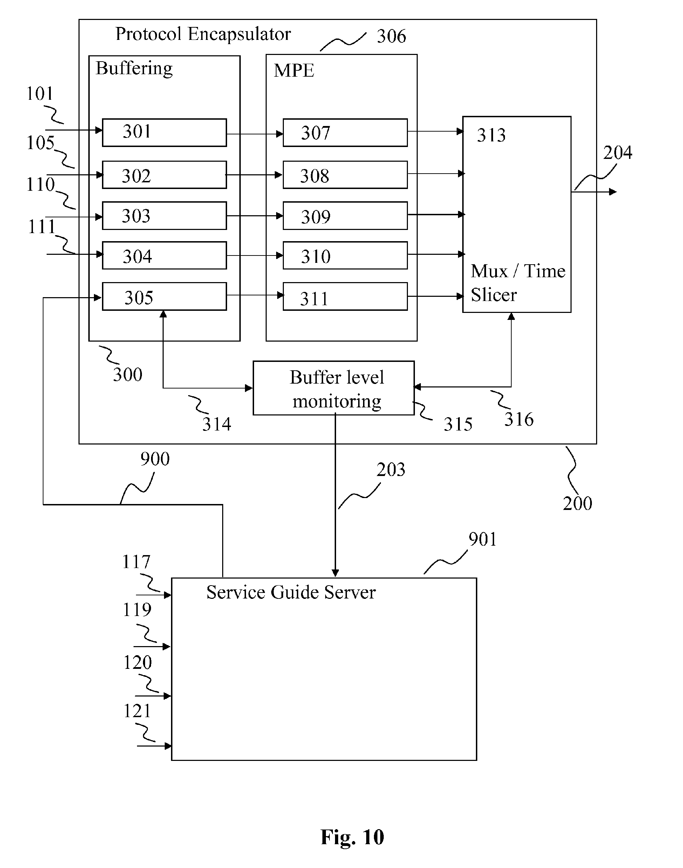

**Figure 10** shows the operation of the protocol encapsulator 200 according to a second embodiment of the invention. The main role of the Protocol Encapsulator is to adapt input data to a specific output format that is accepted by a modulator. A protocol encapsulator 200 may receive on its inputs Service Guide metadata streams as well as Audio and/or Video data streams, and adapt these for transmission over an ASI (Asynchronous Serial Interface) type output to a DVB-H modulator. Typically, a Protocol Encapsulator according to the invention is capable of handling more than one A/V input stream and one Service Guide stream, and optionally an input for signalization data, such as DVB-SI (Digital Video Broadcasting - Service Information). Figure 10 shows an example of a Protocol Encapsulator according to the second embodiment invention capable of handling 4 A/V input streams and one SG stream. This Protocol Encapsulator comprises a function for buffering of input data 300, with buffers 301, 302, 303, 304 and 305 for each respective input 101, 105, 110, 111 and 900; a protocol encapsulator function 306 here named MPE for Multi-Protocol Encapsulation, and a multiplexer / Time Slicer function 313. The encapsulator function 306 comprises separate encapsulation functions 307 to 311 for all outputs of buffers 301 to 305 respectively. The outputs of these encapsulation functions are input to the multiplexing / time slicing function 313. A multiplexing function may be used to combine multiple inputs into one single transport stream, and a time slicing may be used for battery saving of portable receivers, and such a time slicing function may comprise partitioning of the available space on the transportation link in terms of time slot or bandwidth. The output signal of the multiplexer / time slicer function 313 is put on output 204 to an RF modulator. A Protocol Encapsulator 200 further comprises a fill level monitoring function 315 that monitors the buffer 305 fill level via connection 314. According to a particular embodiment of the invention, the monitoring function uses a fill level signal from the multiplexer / time slicer 313, thus relating the fill level monitoring to the overall bandwidth needed for the multiplexed / time sliced data. According to a particular embodiment of the invention, this signal is used by the fill level monitoring function 315 in stead of the signal 314 from the Service Guide metadata buffer 305. According to a particular embodiment of the invention, the signal 316 is used by the fill level monitoring function in conjunction with the signal 314. The monitoring function 315 determines the maximum size for the Service Guide metadata as a function of the obtained information on the fill level. The monitoring function may decide to send a message 203 to the Service Guide server 201 that contains the maximum size for the service guide metadata, in order to control the maximum size of the metadata that is sent by the latter. The Service Guide server 901 receives input data that contains metadata for the channels CH1 to CH4, on inputs 117 to 121 respectively.

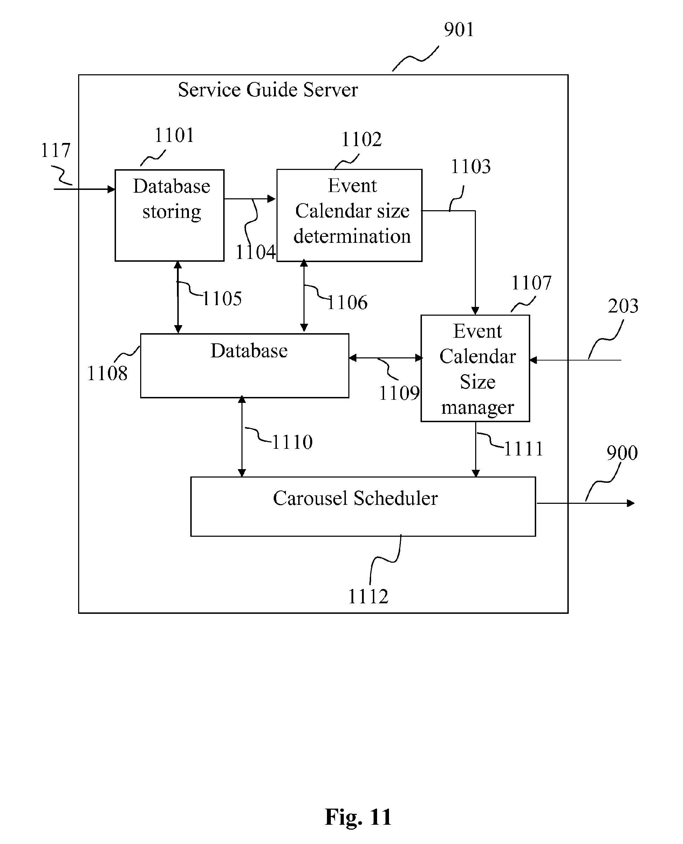

**Figure 11** gives a detailed view of a service guide server according to the second embodiment of the invention of figures 9 and 10. Service Guide server 901 comprises a function 1101 allowing storing of incoming service guide metadata on inputs 117, 119, 120 and 121 into database 1108, by means of connection 1105. Then, a function 1102 named Event Calendar Size Determination determines the size per day of the stored metadata and stores this information in the database, by means of connection 1106. Furthermore, Service Guide server comprises a function 1112 that enables this server to send the service guide in a carousel format to the Protocol Encapsulator 200. According to the value of the maximum metadata size allowed by the Protocol Encapsulator, manager function 1107 decides if the duration in days of the metadata that is taken by scheduler 1112 for inclusion into the carousel must be reduced, can remain unchanged, or can be increased. To do so, manager function 1107 seeks in the database a duration in days of which the added up metadata size is lower or equal to the maximum allowed metadata size indicated by the message. Then the manager function 1107 marks metadata that must be excluded or un-marks previously excluded metadata that can be included again. Then, carousel scheduler 1112 can start a new data collection, during which it builds a new metadata carousel that includes all metadata except metadata that has been marked for exclusion. Finally, scheduler sends a new metadata carousel to Protocol Encapsulator 200 over connection 900.

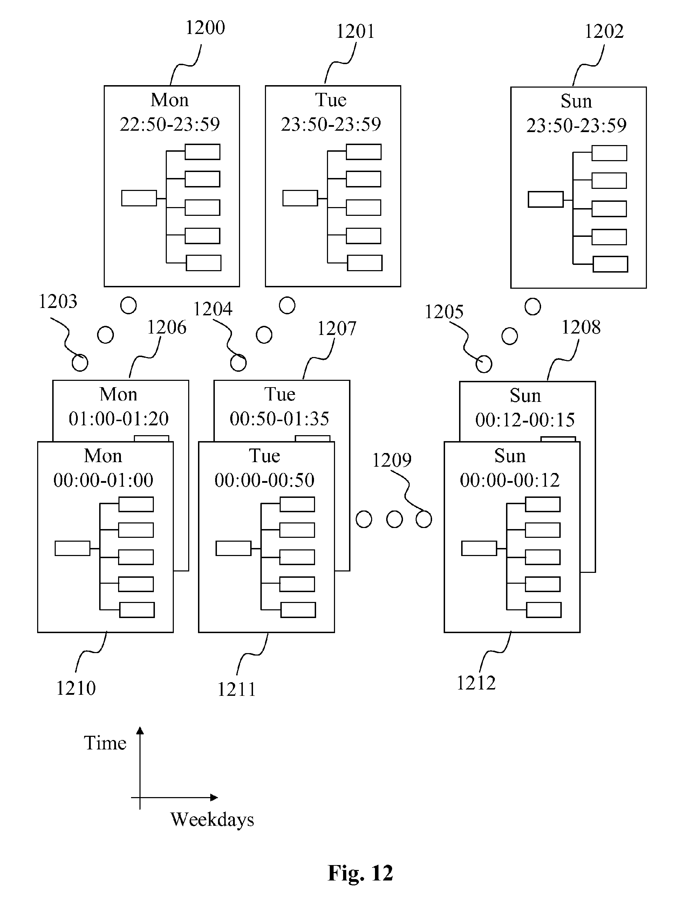

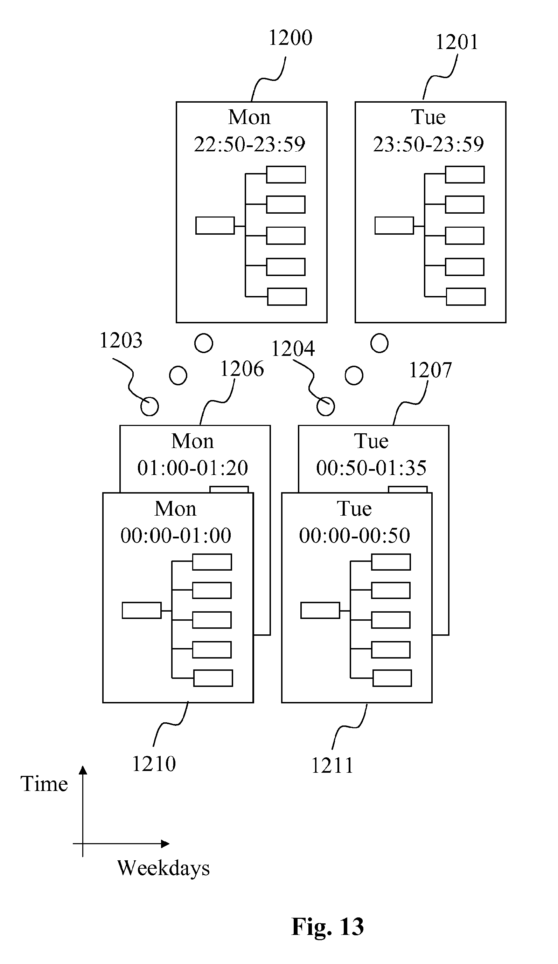

This method of the second embodiment is best explained with the help of figures 12 and 13 which illustrate a method for service guide metadata size reduction inside a Service Guide server. **Figure 12** shows Service Guide metadata represented as a weekday event calendar. The horizontal axis represents the different days of the week (e.g. Monday, Tuesday, etc). The vertical axis represents the time (i.e. 00:00-23:59) of one day. The dotted lines 1203, 1204 and 1205 represent other, not depicted events for days Monday, Tuesday and Sunday, respectively. The dotted line 1209 represent other, not depicted days Wednesday, Thursday, Friday and Saturday. Each event is represented by a rectangle containing an event day, start time and end time. For example, rectangle 1210 represents an event for day Monday that starts at 00:00 and ends at 01:00. Rectangle 1208 represents an event for Sunday that starts at 00:12 and ends at 00:15, and so on.

**Figure 13** shows a reduction of the Service Guide metadata size according to the second embodiment of the invention. As for figure 12, the Service Guide metadata represented as a weekday event calendar. The horizontal axis represents the different days of the week Monday and Tuesday. The vertical axis represents the time (i.e. 00:00-23:59) of one day. The dotted lines 1203 and 1204 represent other not depicted events for days Monday and Tuesday, respectively. Each event is represented by a rectangle containing an event day, start time and end time. For example, rectangle 1210 represents an event for day Monday that starts at 00:00 and ends at 01:00. Rectangle 1207 represents an event for Tuesday that starts at 00:50 and ends at 01:35, and so on. When figure 12 is compared to figure 13, it can be observed that the difference between the two figures expresses the reduction of the weekday event calendar duration according to the second embodiment of the invention.

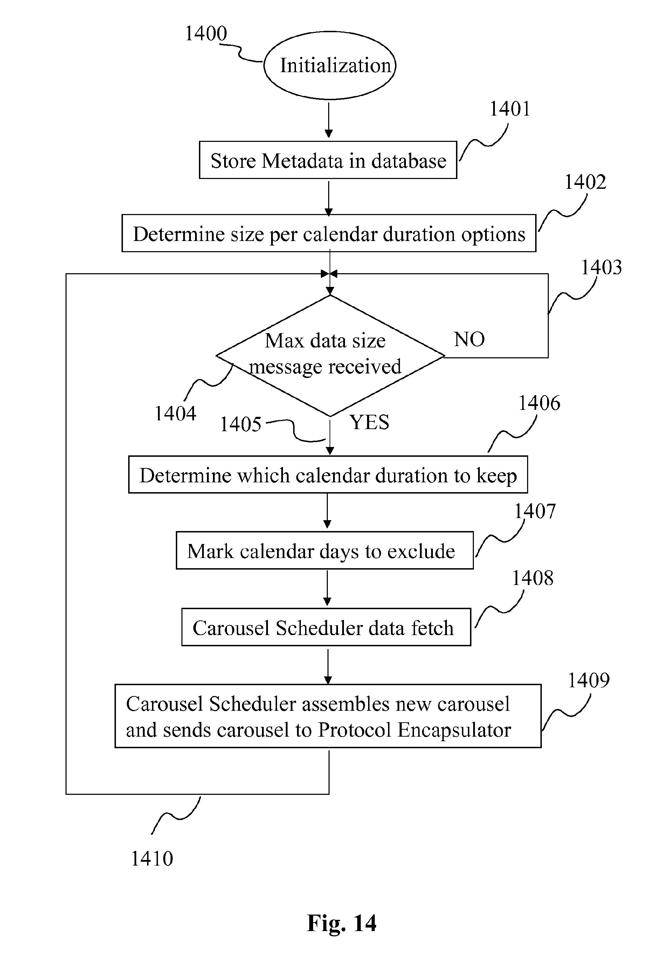

**Figure 14** shows an algorithm used by the Service Guide server according to the second embodiment of the invention. In a first step 1400 variables are initialized. Then in a step 1401 incoming metadata is stored into a database. Then in a step 1402, the size of the metadata is determined as a function of the duration in weekdays. For example, the size of the metadata is determined for 3 weekdays Monday to Wednesday, or for 7 weekdays Monday to Sunday. Then, in a step 1404, the Metadata Size Manager is ready to receive a message from Protocol Encapsulator 200 indicating a maximum size for the metadata that the Service Guide server may output. Following branch 1403, step 1404 is repeated as long as such a message is not received. However, when such a message is indeed received, branch 1405 is taken which leads to step 1406, where the Metadata Size Manager decides which weekdays to exclude, if necessary. Then, in a step 1407, Metadata Size Manager marks data to be excluded and/or un-marks data that was already marked for exclusion in a previous iteration of steps 1404 to 1410, if needed. As a next step 1408, the Carousel Scheduler fetches the not marked data from the database and assembles a new carousel and sends the carousel to the Protocol Encapsulator in a step 1409. Finally, the algorithm returns to step 1404 and waits for another message from the Protocol Encapsulator.

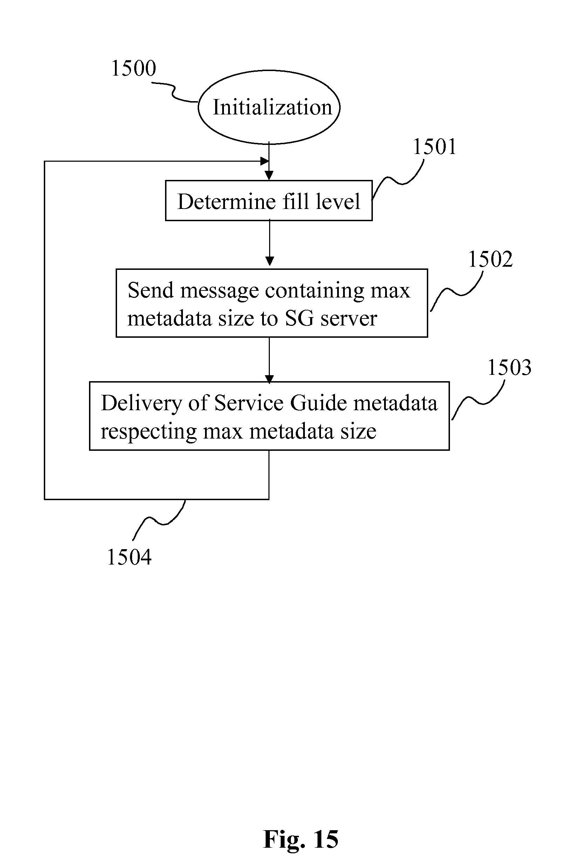

**Figure 15** shows an algorithm according to the invention. The algorithm starts with step 1500 during which different variables used in the method are initialized. Then, in a step 1501, a maximum size for the service guide metadata is determined as a function of a protocol encapsulator fill level. Then, in step 1502, a message containing the maximum size for the service guide metadata is sent to a Service Guide server connected to the contribution network. Next, in step 1503, the Service Guide server delivers service guide metadata to the protocol encapsulator where the size of the service guide metadata is smaller than or equal to the determined maximum size.

In a particular embodiment of the invention, the described first and second embodiments can be combined in an exclusive way order to better adapt the Service Guide metadata to the Encapsulator fill level. In this way, the maximum size of the service guide metadata can be respected by either pruning of the metadata tree or by varying the duration in days of the service guide metadata.

In a particular embodiment of the invention, the described first and second embodiments can be combined in a non-exclusive way, in order to better adapt the Service Guide metadata to the Encapsulator fill level. This solution has the advantage to be very flexible.

Of course, the invention is not limited to the embodiments described above.

The exemplary embodiments of the invention which are described here do not limit the field of application of the invention to the type of network and to the type of devices that have been described, nor is the invention restricted to the architecture of the described devices. The invention can be used within other types of networks, devices or within devices with a different architecture, should one seek to adapt the size of service guide metadata to the fill level of a protocol encapsulator.

As an example, the invention can be applied to a distribution network, with specific, regional constraints, that are different from the constraints laid on the contribution network.

As an example, the invention can be applied to other type of devices than MPE encapsulators and XML service guide servers, when the devices implementing the invention are adapted to other types of networks than IP based, such as satellite transmission (e.g. DVB-S), and when the Service Guide data uses a different type of formatting than XML, such as JSON (Javascript Object Notation) or SOX (Simple Outline XML).

As an example, devices as described by the invention may use a different architecture, such as the absence of a time slicer function, as for transmission over satellite, and/or may include other functions that are not described in this document, such as error-resilient coding, DVB-SI table regeneration, or inputs for audio and/or video streams that accept already multiplexed streams.

## Claims

1. Method of management of metadata size of a service guide, by devices part of a contribution network, comprising a protocol encapsulator accepting as input audio and/or video data and service guide data and a service guide server, **characterized in that** it comprises the following steps:
- determination (1501) of a maximum size for the service guide metadata as a function of a protocol encapsulator fill level;
- sending (1502) of a message containing the said maximum size for the service guide metadata destined for a service guide server connected to the said contribution network ;
- delivery (1503) by said service guide server of service guide metadata to said protocol encapsulator where the size of the said service guide metadata is smaller than or equal to said maximum size.

2. Method according to Claim 1 wherein said service guide metadata is provided to said protocol encapsulator in the Extensible Markup Language format.

3. Method according to one of Claims 1 to 2 where the said service guide metadata is stored in said service guide server in an Extensible Markup Language metadata tree format.

4. Method according to Claim 3 wherein said service guide server respects the said maximum metadata size by pruning of the said XML metadata tree.

5. Method according to one of Claims 1 to 4 wherein said service guide server varies the duration in days of the said service guide metadata in order to respect the said maximum metadata size.

6. Method according to one of Claims 3 to 5 wherein said service guide server respects the said maximum metadata size by either pruning the said metadata tree or by varying the duration in days of said service guide metadata.

7. Method according to Claims 4 and 5 wherein said service guide server respects the said maximum metadata size by pruning the said metadata tree and by varying the duration in days of said service guide metadata.

8. Method according to one of the Claims 1 to 7 wherein said message, containing the said maximum service guide metadata size, is sent upon expiration of a time delay.

9. Method according to one of the Claims 1 to 7 wherein said message, containing the said maximum service guide metadata size, is sent upon exceeding of a predetermined maximum value of said encapsulator fill level.

10. Method according to Claim 8 wherein said message, containing the said maximum service guide metadata size, is sent upon exceeding of a predetermined maximum value of said encapsulator fill level.
